# EUROPÄISCHE PATENTSCHRIFT

(11) **EP 0 782 213 B1**
(45) Veröffentlichungstag und Bekanntmachung des Hinweises auf die Patenterteilung: **07.07.1999**
(21) Anmeldenummer: 96119166.5
(22) Anmeldetag: 28.11.1996
(51) Int. Cl.: H01Q 1/24, H04B 1/48, H01Q 1/32, H04B 1/38

(54) **Funkstation mit einer abgesetzten Antenneneinheit**
Radio station with a separate antenna unit
Station radioélectrique avec une unité d'antenne séparée

(30) Priorität: 18.12.1995 DE 19547288
(43) Veröffentlichungstag der Anmeldung: 02.07.1997
(73) Patentinhaber: SIEMENS AKTIENGESELLSCHAFT, 80333 München (DE)
(72) Erfinder: Korte, Werner, Dipl.-Ing., 80538 München (DE); Eul, Hermann, Dr. Ing., 85764 Oberschleissheim (DE)

(56) Entgegenhaltungen:
- EP-A- 0 447 614
- WO-A-95/19097
- DE-A- 4 405 885

## Beschreibung

Funkstationen dienen der Übertragung von Informationen mit Hilfe elektromagnetischer Wellen. Das Frequenzspektrum der infragekommenden elektromagnetischen Wellen reicht von wenigen kHz bis zu mehreren 100 GHz, wobei insbesondere das Frequenzspektrum im unteren GHz-Bereich durch die Entwicklung der Mobilfunktechnik an Bedeutung gewonnen hat. So werden Funkstationen für die Mobilfunktechnik bei ca. 0,9 und 1,8 GHz eingesetzt.

Sind diese Funkstationen dafür vorgesehen, Informationen sowohl zu senden als auch zu empfangen, umfassen sie eine Empfangseinheit und eine Sendeeinheit. In der Sendeeinheit werden die zu sendenden Informationen auf einen Träger moduliert und die generierten Sendesignale verstärkt. Die Empfangseinheit dient zur Auswertung der Information der Empfangssignale und deren Trennung vom Träger und von Rauschstörungen.

Weiterhin umfaßt die Funkstation eine Antenneneinheit mit einer Antenne. Für den Fall einer Basisstation in Mobilfunknetzen ist die Antenne üblicherweise auf einem Mast montiert, währenddessen sich Empfangseinheit und Sendeeinheit am Fuße des Mastes in einer leichter zugänglichen Systemeinheit befinden. Die Antenneneinheit ist somit abgesetzt von Empfängereinheit und Sendeeinheit. Die räumliche Trennung von Antenneneinheit und den übrigen Einheiten der Funkstation führt dazu, daß die Sende- und Empfangssignale über längere Verbindungsleitungen geführt werden müssen. Für Frequenzen im GHz-Bereich bedeutet dies für die bereits verstärkten Sendesignale erhebliche Verluste und für die Empfangssignale zusätzliches, durch die Verbindungsleitung bedingtes Rauschen.

Es ist allgemein bekannt, eine gemeinsame Antenne für das Senden und den Empfang von elektromagnetischen Wellen vorzusehen, siehe Handbuch für Hochfrequenz- und Elektrotechniker, Hüthig Verlag, Heidelberg, 1980, Band 4, Seiten 598 bis 600 und 618 bis 622. Um die Sende- und Empfangssignale zu trennen, können Zirkulatoren oder Duplexer in der Systemeinehit eingesetzt werden. Die in der Sendeeinheit erzeugten Sendesignale werden somit dem Zirkulator oder Duplexer zugeführt, der die Sendesignale auf die Antenneneinheit führt. Die Empfangssignale werden von der Antenne aufgenommen und an den Zirkulator oder Duplexer weitergeleitet und anschließend in der Empfangseinheit weiterverarbeitet.

Der Zirkulator oder Duplexer zur Trennung der Sende- und Empfangssignale und die Einheiten zur Vorverstärkung der Empfangssignale werden hierbei mit den übrigen Schaltungsteilen in einer Sende- und Empfangseinheit integriert. Nutzt man abgesetzte Antennen, wie z.B. bei den Basisstationen in Mobilfunknetzen, wird eine lange Verbindungsleitung zwischen Antenneneinheit mit Antenne und auf der anderen Seite dem Zirkulator oder Duplexer nötig. Die zusätzlich entstehenden Rauschstörungen der Empfangssignale sind dabei bei höheren Frequenzen, wie z.B. bei 0,9 GHz, erheblich und in der Sendeeinheit nur mit hohem Aufwand zu kompensieren.

Es ist weiterhin aus der Siemens Produktspezifikation Receiver Antenne Module RXAMOD (D1800) S. 1-2, 4-1/2 vom 9.6.1995 ein Antennenempfängermodul bekannt, bei dem getrennt Empfangsantennen und Sendeantennen eingesetzt werden. Damit liegen getrennte Verbindungsleitungen für Sende- und Empfangssignale vor, und der Pegel der Empfangssignale kann in einem antennenahen Vorverstärker noch vor der Empfängereinheit angehoben werden.

Aus DE 44 05 885 A ist eine Mobilstation für ein Mobilfunknetz bekannt, bei der eine elektrisch zwischen Teilnehmer-Funkgerät und Antenne angeordnete Kompensationseinrichtung die Leitungsdämpfungen ausgleicht. Aus WO 95 19097 A ist ein Kommunikationssystem für ein Fahrzeug bekannt, das ein Mobilstation für ein Mobilfunknetz mit einer Funkeinrichtung, z.B. einer CB-Funkeinrichtung kombiniert. Weiterhin ist aus EP 0 447 614 A eine Antennenweiche bekannt.

Der Erfindung liegt die Aufgabe zugrunde, eine Basisstation mit abgesetzter Antenneneinheit anzugeben, die bei minimalem Platzbedarf für die Antenne wirtschaftlich betrieben werden kann. Die Aufgabe wird durch die Funkstation nach den Merkmalen des Oberbegriffs des Patentanspruchs 1 durch dessen kennzeichnende Merkmale gelöst.

Die erfindungsgemäße Funkstation erreicht die Vorteile minimalen Platzbedarfs für die Antennen, in dem eine gemeinsame Sende- und Empfangsantenne eingesetzt wird. Zusätzliche und optisch auffällige Antennenanlagen stoßen in dichtbevölkerten Gebieten auf immer weniger Akzeptanz und bedürfen auch aufwendiger Montagearbeiten. Durch kompakte Sende/Empfangsantennen kann dieser Aufwand verringert und die Akzeptanz erhöht werden. Um den Nachteil von Sende/Empfangsantennen einer gemeinsamen Verbindungsleitung für Sende- und für Empfangssignale von Antenneneinheit zur Systemeinheit mit Sende- und Empfangsteil zu kompensieren, wird ein Duplexer der Antenneneinheit zugeordnet. Damit können Sende- und Empfangssignale antennennah angepaßt verarbeitet werden bzw. ist es möglich, entsprechende, den jeweiligen Signalen angepaßte Verbindungsleitungen zwischen Antenneneinheit und Sende- bzw. Empfangseinheit einzusetzen. Durch eine Integration von Duplexer und Sende/Empfangsantenne kann eine weitere Platzeinsparung erzielt werden.

Vorteilhafterweise wird zusätzlich ein Vorverstärker für Empfangssignale der Antenneneinheit zugeordnet und zwischen Duplexer und Empfangseinheit angeordnet - Anspruch 3. Die Empfangssignale werden also antennennah vorverstärkt, so daß der Rauscheinfluß des Kabels der Verbindungsleitung von Antenneneinheit zur Empfangseinheit auf das Signal/Rauschverhältnis gering bleibt. Es besteht die Möglichkeit, zwischen hochwertigen oder wirtschaftlich realisierbaren Vorverstärkern, Duplexern und Kabeln zu variieren und die Funkstation wirtschaftlich und mit hoher Systemleistungsfähigkeit zu gestalten.

Weiterhin kann die Antenneneinheit zusätzlich einen Leistungsverstärker zur Verstärkung der Sendesignale enthalten - Anspruch 4. Verluste auf der Verbindungsleitung für die Sendesignale können so antennenah kompensiert werden, und größere Kabelverluste können in Kauf genommen werden.

Sollte es sich als störend erweisen, getrennte Verbindungsleitungen für Sende- und Empfangsssignale zwischen Antenneneinheit und Sende- bzw. Empfangseinheit einzusetzen, kann zur Verbindung zwischen Antenneneinheit und Empfangseinheit bzw. Sendeeinheit eine weitere Einheit, als Duplexer oder Multiplexer ausgeprägt, genutzt werden, durch die die antennenseitigen Sendesignale und Empfangssignale auf den Verbindungsleitungen für Sende- und Empfangspfad auf einer Verbindungsleitung zusammenfaßt werden - Ansprüche 5, 6 und 7. Zur Stromversorgung und Steuerung einer abgesetzten Antenneneinheit sind Verbindungsleitungen erforderlich, die der Antenneneinheit die Spannungen zur Stromversorgung zuführen und ebenso Steuersignale an die Antenneneinheit übermitteln bzw. Steuersignale der Antenneneinheit an die Systemeinheit weiterleiten.

Die Einkopplung der Versorgungsspannungen für zumindest Teile der Antenneneinheit kann über einen Multiplexer oder eine Trennstufe geschehen. Die erste Trennstufe koppelt beispielsweise die Versorgungsspannungen als Gleichspannungsanteil und Steuersignale (Fehler- oder Rückmeldungssteuersignalen) als niederfrequente Signale aus der Verbindungsleitung der Sendesignale aus, wobei über Filter Gleichspannungen und Signale mit verschiedenen Frequenzen und damit auch die hochfrequenten Sende- bzw. Empfangssignale von Steuersignalen trennbar sind.

Korrespondierende Trennstufen sind jeweils in der Antenneneinheit und der Sende- bzw. Empfangseinheit vorgesehen. In der Antenneneinheit können äquivalente Trennstufen zur Ein/Auskoppelung auch auf der Verbindungsleitung der Empfangssignale eingesetzt werden. Besonders vorteilhaft ist es, den Duplexer und den Vorverstärker antennennah, d.h. möglichst mit der Antenne zusammen in der Antenneneinheit integriert sind.

Die Erfindung soll im folgenden anhand von Ausführungsbeispielen näher erläutert werden.

Dabei zeigen
- FIG 1: eine schematische Darstellung der Funkstation und
- FIG 2 bis 8: verschiedene Ausgestaltungen der Antenneneinheit der Funkstation.

Die Funkstation FS umfaßt eine oder mehrere Sendeeinheiten SE und eine oder mehrere Empfangseinheiten EE (beispielhaft ist jeweils eine Sende bzw. Empfangseinheit SE, EE gegeben), die mit einer abgesetzten Antenneneinheit AE verbunden sind. Der Antenneneinheit AE zugehörig ist auch eine gemeinsame Sende- und Empfangsantenne A. Dabei werden in der Sendeeinheit SE generierte Sendesignale ts von der Sendeeinheit SE an die Antenneneinheit AE übertragen und über die Sende- und Empfangsantenne A als hochfrequente elektromagnetische Signale abgestrahlt. Die Sende- und Empfangsantenne A nimmt Empfangssignale rs auf, die von der Antenneneinheit AE an die Empfangseinheit EE übermittelt werden. Die Empfangseinheit EE und die Sendeeinheit SE können dabei auch zumindest teilweise in einer Systemeinheit zusammengefaßt werden, d.h. eine gemeinsame Stromversorgung und eine gemeinsame zentrale Steuerung - nicht dargestellt - aufweisen.

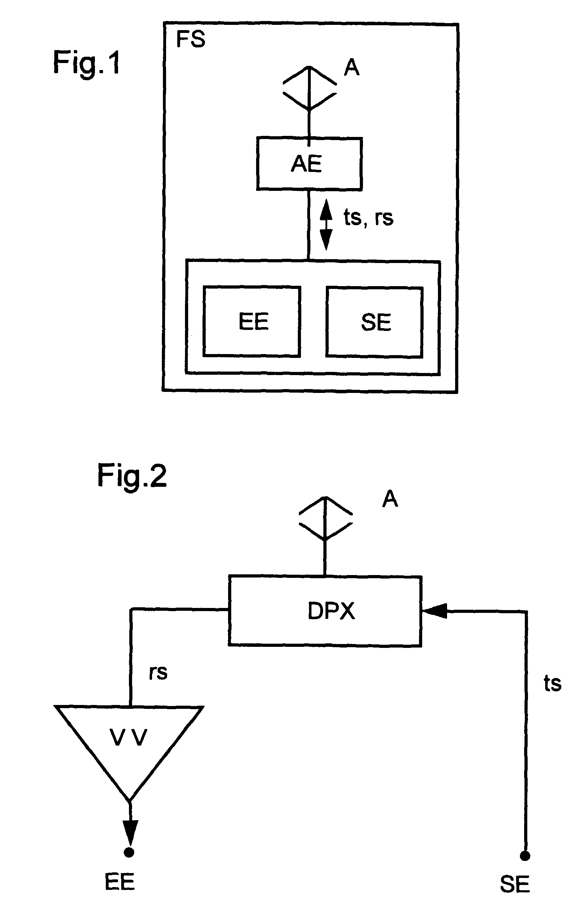

In FIG 2 ist die Antenneneinheit AE dargestellt, wobei die Sende- und Empfangsantenne A mit einem Duplexer DPX über eine Verbindungsleitung verbunden ist, in den die Sendesignale ts über eine Verbindungsleitung des Sendepfades eingespeist und an die Sende- und Empfangsantenne A weitergeleitet werden und in dem die von der Antenne empfangenen Empfangssignale rs an einen mit dem Duplexer DPX über eine Verbindungsleitung im Empfangspfad verbundenen Vorverstärker VV weitergeleitet werden. Der Vorverstärker VV nimmt eine Pegelerhöhung der Empfangssignale rs vor. Für Empfangssignale rs und Sendesignale ts bestehen getrennte Verbindungsleitungen zu der Empfangseinheit EE bzw. der Sendeeinheit SE.

Der Duplexer DPX ermöglicht es, bei einer gemeinsamen Sende- und Empfangsantenne A den Vorverstärker VV trotzdem antennennah, d.h. mit sehr kurzen Verbindungsleitungen, zur Sende- und Empfangsantenne A zu realisieren. Durch die antennennahe Vorverstärkung kann das Signal/Rauschverhältnis vor einer wesentlichen Verschlechterung durch zusätzliches durch die Kabelverbindungen bedingtes Rauschen bewahrt bleiben.

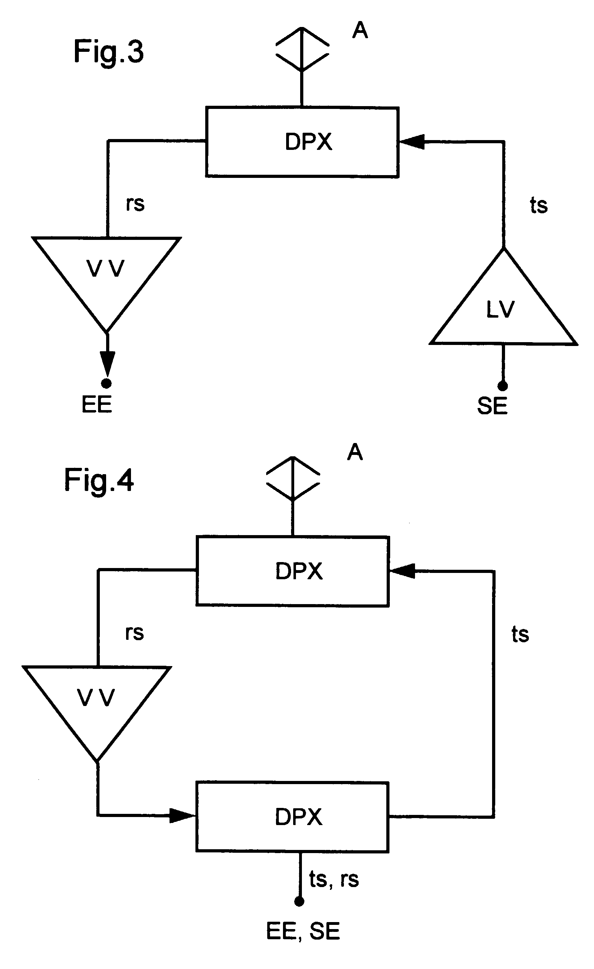

In FIG 3 wird der Antenneneinheit AE noch ein zusätzlicher Leistungsverstärker LV zugefügt. Damit werden auch die Sendesignale ts antennennah verstärkt. Leistungsstarke Sendesignale ts müssen somit nicht über lange Kabelverbindungen und damit verbundenen größeren Verluste bis zur Antenneneinheit geführt werden. Für die Antenneneinheit AE nach FIG 2 und 3 bestehen zwei getrennte Verbindungsleitungen zwischen Antenneneinheit AE und Sende- bzw. Empfangseinheit SE, EE. Diese Variante läßt die Möglichkeit zu, die Kabel, die die Verbindungsleitungen realisieren, an die jeweiligen Signale rs,ts optimal anzupassen. Das heißt, das Kabel für die Empfangssignale ts sollte rauscharm sein; über dieses Kabel sind jedoch nur Signale mit extrem geringen Leistungen zu übertragen. Eine wirtschaftliche Ausgestaltung kann durch ein rauscharmes Kabel ohne Vorverstärker VV oder bei Einsatz eines Vorverstärkers VV auch durch eine Kabel minderer Qualität erreicht werden. Das Kabel für die Sendesignale ts hingegen muß auch für Signale mit höheren Leistungen geeignet sein und sollte möglichst rauscharm sein.

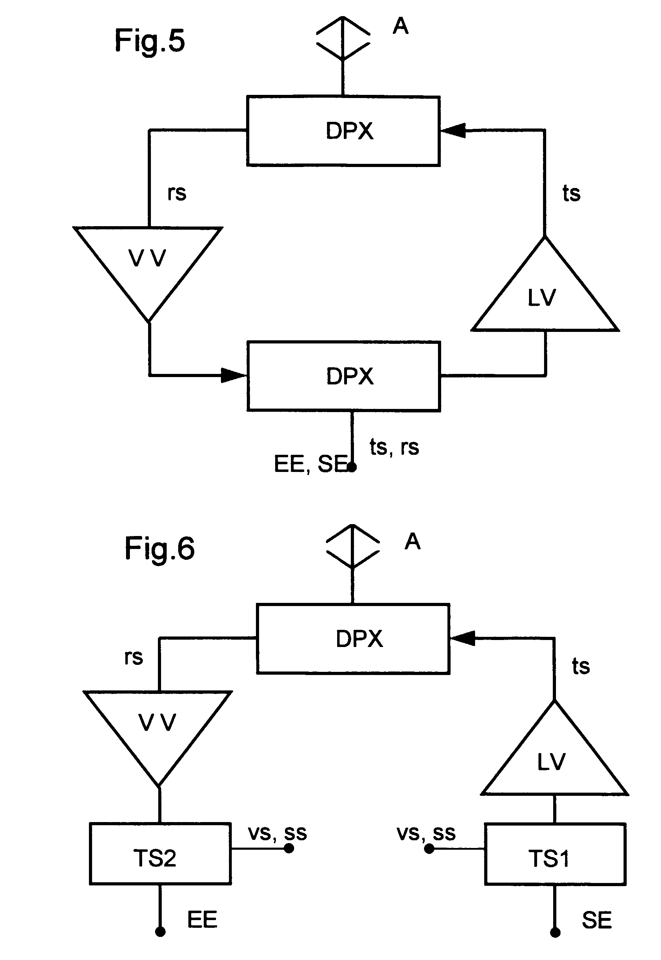

Getrennte Verbindungsleitungen zwischen Antenneneinheit AE und Sendeeinheit SE bzw. Empfangseinheit EE können dadurch vermieden werden, daß - wie in FIG 4 dargestellt - ein weiterer Duplexer DPX in der Antenneneinheit AE angeordnet ist, wodurch Sendesignale ts und Empfangssignale rs auf einer gemeinsamen Verbindungsleitung übertragen werden können. Es sind dabei verschiedene Varianten möglich, die Antenneneinheit AE kann ohne Leistungsverstärker LV - FIG 4 - oder mit Leistungsverstärker LV - FIG 5 - aufgebaut werden.

Die Stromversorgung und Steuerung der Antenneneinheit AE und ihrer Baugruppen ist durch Zuführung von Versorgungsspannungen vs und Steuersignalen ss zu gewährleisten. Um wiederum den Anspruch einer platzsparenden und wirtschaftlichen Realisierung der Funkstation FS gerecht zu werden, sollten die Versorgungsspannungen vs der Antenneneinheit AE extern zugeführt und nicht in der Antenneneinheit AE erzeugt werden.

In FIG 6 ist die aus FIG 3 bekannte Antenneneinheit AE dargestellt, wobei jedoch im Sendepfad eine erste Trennstufe TS1 angeordnet ist, über die Versorgungsspannungen vs und Steuersignale ss für die Antenneneinheit AE auf die Verbindungsleitung für die Sendesignale ts eingekoppelt werden. Vorteilhafterweise geschieht dies, indem die Versorgungsspannungen vs als Gleichspannungsanteile, die Steuersignale ss als niederfrequente Signale und die Sendesignale ts als hochfrequente Signale auf der gleichen Verbindungsleitung übertragen und durch die erste Trennstufe TS1 ausgekoppelt werden. Eine korrespondierende Trennstufe befindet sich in der Sendeeinheit SE, die diese Signale auf diese Verbindungsleitung zuvor einkoppelt bzw. evt. zu empfangende Meldungssignale auskoppelt.

Im Empfangspfad ist eine zweite Trennstufe TS2 angeordnet und z.B. mit dem Ausgang des Vorverstärkers VV verbunden. Fehler und Rückmeldungssignale der Antenneneinheit AE werden als Steuersignale ss somit auf die Verbindungsleitung der Empfangssignale rs eingekoppelt und an die Empfangseinheit EE übertragen. Dort müßten sie wiederum mit einer korrespondierenden Trennstufe ausgekoppelt und weiteren Auswerteeinrichtungen zugeführt werden. Über diese Verbindungsleitung kann ebenfalls die Stromversorgung der Antenneneinheit AE sichergestellt werden. Die Energieflußrichtung der HF-Signale hat keinen Einfluß auf die Flußrichtung der Gleichspannungssignale bzw. Steuer/Meldesignale.

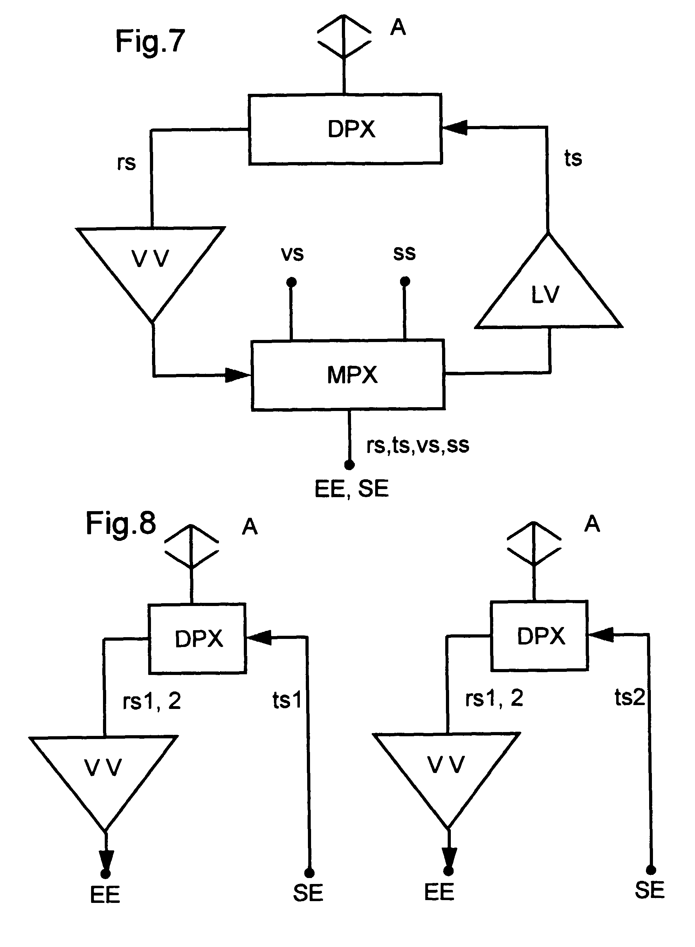

Eine weitere Möglichkeit zur Behandlung von Versorgungsspannungen vs und Steuersignalen ss ist in FIG 7 dargestellt. Ein Multiplexer MPX verbindet in der Antenneneinheit AE Empfangssignale rs und Sendesignale ts auf einer gemeinsamen Verbindungsleitung zur Sendeeinheit SE bzw. Empfangseinheit EE. Der Multiplexer MPX realisiert jedoch gleichzeitig das Auskoppeln von auf dieser gemeinsamen Verbindungsleitung übertragenen Versorgungsspannungen vs und Steuersignalen ss. Diese Signale bzw. Spannungen vs, ss wurden zuvor in der Sendeeinheit SE eingekoppelt. Der Multiplexer MPX ermöglicht es jedoch auch, zusätzlich die von der Antenneneinheit AE erzeugten Steuersignale ss zurück zur Empfangseinheit EE zu übertragen, indem sie auf die gemeinsame Verbindungsleitung eingekoppelt werden. Wie in FIG 4 ist es bei dieser Ausprägungsform der Antenneneinheit AE möglich, in einer einzigen Verbindungsleitung zur Sendeeinheit SE bzw. Empfangseinheit EE auszukommen.

In FIG 8 ist eine weitere Möglichkeit der Gestaltung der Antenneneinheit AE verdeutlicht. Die Antenneneinheit AE umfaßt hier zwei (es könnten jedoch auch mehr sein) Sende/Empfangsantennen A und zwei Duplexer DPX, in die jeweils ein Sendesignal ts1, ts2 getrennt eingespeist wird. Die verschiedenen Sendesignale ts1, ts2 werden also getrennt abgestrahlt, währenddessen die Empfangssignale rs1, rs2 auf beiden Sende/Empfangsantennen A empfangen werden und beispielsweise noch in der Antenneneinheit AE in jeweils einem Vorverstärker VV vorverstärkt werden. Hieraus ergibt sich die Möglichkeit des Diversity-Empfangs, und gleichzeitig der Erzielung einer geringen Durchgangsdämpfung für die Sendesignale ts1, ts2, da diese auf unterschiedliche Antennen A geführt werden. Äquivalente Ausgestaltungen sind ebenfalls mit einer größeren Anzahl von Sende/Empfangsantennen A möglich. Die Antenneneinheit AE kann jedoch auch weitere Komponenten, wie in den FIG 3 bis 7 angegeben enthalten.

## Patentansprüche

1. Basisstation (FS) für ein Mobilfunksystem mit zumindest einer Empfangseinheit (EE) zur Auswertung von Empfangssignalen (rs), zumindest einer Sendeeinheit (SE) zur Erzeugung von Sendesignalen (ts) und zumindest einer räumlich abgesetzten, eine Sende- und Empfangsantenne (A) aufweisenden Antenneneinheit (AE), sowie einem Duplexer (DPX) für Verbindungsleitungen von Sende- und von Empfangspfad,
**dadurch gekennzeichnet**,
- daß der Duplexer (DPX) der Antenneneinheit (AE) zugeordnet ist, und
- daß der Duplexer (DPX) antennennah, also in größerer Entfernung von der Empfangseinheit (EE) bzw. der Sendereinheit (SE) angeordnet ist.

2. Funkstation (FS) nach Anspruch 1,
**dadurch gekennzeichnet**,
daß die Antenneneinheit (AE) mit der Sende- und Empfangsantenne (A) als integrierte Einheit ausgebildet ist.

3. Funkstation (FS) nach Anspruch 1 oder 2,
**dadurch gekennzeichnet**,
daß zusätzlich ein Vorverstärker (VV) für die Empfangssignale (rs) der Antenneneinheit (AE) zugeordnet und zwischen dem Duplexer (DPX) und der Empfangseinheit (EE) angeordnet ist.

4. Funkstation (FS) nach Anspruch 1, 2 oder 3,
**dadurch gekennzeichnet**,
daß die Antenneneinheit (AE) zusätzlich einen Leistungsverstärker (LV) zur Verstärkung der Sendesignale (ts) umfaßt.

5. Funkstation (FS) nach einem der Ansprüche 1 bis 4,
**dadurch gekennzeichnet**,
daß zur Verbindung zwischen der Antenneneinheit (AE) und der Empfangseinheit (EE) bzw. der Sendeeinheit (SE) eine weitere Einheit (DPX, MPX) vorgesehen ist, durch die die antennenseitigen Sendesignale (ts) und Empfangssignale (rs) auf den Verbindungsleitungen für den Sende- und den Empfangspfad auf einer Verbindungsleitung zusammenfaßt bzw. diese Signale (ts, rs) getrennt werden.

6. Funkstation (FS) nach Anspruch 5,
**dadurch gekennzeichnet**,
daß die weitere Einheit als zweiter Duplexer (DPX2) ausgebildet ist.

7. Funkstation (FS) nach Anspruch 5,
**dadurch gekennzeichnet**,
daß die weitere Einheit als Multiplexer (MPX) ausgebildet ist, durch die neben der Zusamennfassung bzw. Trennung der Sende- und Empfangssignalen (ts, rs) weitere Spannungen bzw. Signale (vs, ss) auf die Verbindungsleitung ein- bzw. ausgekoppelt werden.

8. Funkstation (FS) nach einem der Ansprüche 1 bis 6,
**dadurch gekennzeichnet**,
daß eine erste Trennstufe (TS1) in der Antenneneinheit (AE) vorgesehen ist, die Versorgungsspannungen (vs) und/oder Steuersignale (ss) für zumindest Teile der Antenneneinheit (AE) aus der Verbindungsleitung der Sendesignale (ts) und/oder der Empfangssignale (rs) auskoppelt.

9. Funkstation (FS) nach einem der Ansprüche 1 bis 8,
**dadurch gekennzeichnet**,
daß eine zweite Trennstufe (TS2) in der Antenneneinheit (AE) vorgesehen ist, die die Steuersignale (ss) für die bzw. von der Antenneneinheit (AE) auf die bzw. von der Verbindungsleitung der Sendesignale (ts) und/oder der Empfangssignale (rs) ein- bzw. auskoppelt.

10. Funkstation (FS) nach einem der Ansprüche 1 bis 9,
mit zwei oder mehr Sende- und Empfangsantennen (A) und Duplexern (DPX) in der Antenneneinheit (AE) und zumindest zwei Sendeeinheiten (SE), wobei jede Sende- und Empfangsantenne (A) mit individuellen Sendesignalen (ts) gespeist wird, und die Empfangssignale (rs) mit den zumindest zwei Sende- und Empfangsantennen (A) gemeinsam empfangen werden.

## Claims

1. Base station (FS) for a mobile radio system having at least one receiving unit (EE) for evaluating received signals (rs), having at least one transmitter unit (SE) for producing transmitted signals (ts), and having at least one physically remote antenna unit (AE) which has a transmitting and receiving antenna (A), as well as having a duplexer (DPX) for connecting lines of the transmitting path and of the receiving path,
characterized
- in that the duplexer (DPX) is assigned to the antenna unit (AE), and
- in that the duplexer (DPX) is arranged close to the antenna, that is to say at a relatively long distance from the receiving unit (EE) and from the transmitter unit (SE).

2. Radio station (FS) according to Claim 1,
characterized
in that the antenna unit (AE) is designed as an integrated unit with the transmitting and receiving antenna (A).

3. Radio station (FS) according to Claim 1 or 2,
characterized
in that a pre-amplifier (VV) for the received signals (rs) is also assigned to the antenna unit (AE) and is arranged between the duplexer (DPX) and the receiving unit (EE).

4. Radio station (FS) according to Claim 1, 2 or 3,
characterized
in that the antenna unit (AE) also has a power amplifier (LV) for amplifying the transmitted signals (ts).

5. Radio station (FS) according to one of Claims 1 to 4,
characterized
in that a further unit (DPX, MPX) is provided for the connection between the antenna unit (AE) and the receiving unit (EE) and/or the transmitting unit (SE), by means of which the transmitted signals (ts) and received signals (rs) at the antenna end are combined on the connecting lines for the transmitting path and the receiving path on one connecting line, or these signals (ts, rs) are isolated.

6. Radio station (FS) according to Claim 5,
characterized
in that the further unit is designed as a second duplexer (DPX2).

7. Radio station (FS) according to Claim 5,
characterized
in that the further unit is designed as a multiplexer (MPX), by means of which further voltages and/or signals (vs, ss) can be injected or output onto the connecting line, in addition to the combination and/or isolation of the transmitted and received signals (ts, rs).

8. Radio station (FS) according to one of Claims 1 to 6,
characterized
in that a first isolating stage (TS1) is provided in the antenna unit (AE), which outputs supply voltages (vs) and/or control signals (ss) for at least parts of the antenna unit (AE) from the connecting line for the transmitted signals (ts) and/or for the received signals (rs).

9. Radio station (FS) according to one of Claims 1 to 8,
characterized
in that a second isolating stage (TS2) is provided in the antenna unit (AE), which injects or, respectively, outputs the control signals (ss) for or, respectively, from the antenna unit (AE) onto or, respectively, from the connecting line for the transmitted signals (ts) and/or the received signals (rs).

10. Radio station (FS) according to one of Claims 1 to 9, having two or more transmitting and receiving antennas (A) and duplexers (DPX) in the antenna unit (AE), and having at least two transmitting units (SE), each transmitting and receiving antenna (A) being fed with individual transmitted signals (ts), and the received signals (rs) being received jointly using the at least two transmitting and receiving antennas (A).

## Revendications

1. Station (FS) de base pour un système de radiotéléphonie mobile, comportant au moins une unité (EE) de réception pour l'exploitation de signaux (rs) de réception, au moins une unité (SE) d'émission pour la production de signaux (ts) d'émission et au moins une unité (AE) d'antenne, comportant une antenne (A) d'émission et de réception séparée dans l'espace, ainsi qu'un duplexeur (DPX) pour des lignes de liaison de voie d'émission et de réception,
caractérisée en ce que
- le duplexeur (DPX) est associé à l'unité (AE) d'antenne et
- le duplexeur (DPX) est monté à proximité de l'antenne, donc à assez grande distance de l'unité (EE) de réception et de l'unité (SE) d'émission.

2. Station (FS) radio suivant la revendication 1,
caractérisée en ce que
l'unité (AE) d'antenne, comportant l'antenne (A) d'émission et de réception, est réalisée en unité intégrée.

3. Station (FS) radio suivant la revendication 1 ou 2,
caractérisée en ce qu'un préamplificateur (VV) pour les signaux (rs) de réception est associé en plus à l'unité (AE) d'antenne et est monté entre le duplexeur (DPX) et l'unité (EE) de réception.

4. Station (FS) radio suivant la revendication 1, 2 ou 3,
caractérisée en ce que l'unité (AE) d'antenne comprend de plus un amplificateur (LV) de puissance pour amplifier les signaux (ts) d'émission.

5. Station (FS) radio suivant l'une des revendications 1 à 4,
caractérisée en ce qu'il est prévu, pour la liaison entre l'unité (AE) d'antenne et l'unité (EE) de réception et l'unité (SE) d'émission, une unité (DPX, MPX) supplémentaire, par laquelle les signaux (ts) d'émission et les signaux (rs) de réception côté antenne sur les lignes de liaison pour la voie d'émission et la voie de réception sont réunis sur une ligne de liaison ou par laquelle ces signaux (ts, rs) sont séparés.

6. Station (FS) radio suivant la revendication 5,
caractérisée en ce que l'unité supplémentaire est réalisée en deuxième duplexeur (DPX2).

7. Station (FS) radio suivant la revendication 5,
caractérisée en ce que l'unité supplémentaire est réalisée en multiplexeur (MPX), par lequel il est réalisé, outre la réunion ou la séparation des signaux (ts, rs) d'émission et de réception, l'envoi et le découplage de tensions et de signaux (vs, ss) supplémentaires sur la ligne de liaison.

8. Station (FS) radio suivant l'une des revendications 1 à 6,
caractérisée en ce qu'il est prévu dans l'unité (AE) d'antenne un premier étage (TS1) séparateur, qui découple, de la ligne de liaison des signaux (ts) d'émission et/ou des signaux (rs) de réception, des tensions (vs) d'alimentation et/ou des signaux (ss) de commande pour au moins des parties de l'unité (AE) d'antenne.

9. Station (FS) radio suivant l'une des revendications 1 à 8,
caractérisée en ce qu'il est prévu dans l'unité (AE) d'antenne un deuxième étage (TS2) séparateur, qui envoie les signaux (ss) de commande pour l'unité (AE) d'antenne à la ligne de liaison des signaux (ts) d'émission et/ou des signaux (rs) de réception ou qui découple les signaux (ss) de commande provenant de l'unité (AE) d'antenne de la ligne de liaison des signaux (ts) d'émission et/ou des signaux (rs) de réception.

10. Station (FS) radio suivant l'une des revendications 1 à 9,
comportant deux ou plusieurs antennes (A) d'émission et de réception et des duplexeurs (DPX) dans l'unité (AE) d'antenne et au moins deux unités (SE) d'émission, chaque antenne (A) d'émission et de réception étant alimentée en signaux (ts) d'émission individuels, et les signaux (rs) de réception étant reçus en commun par les au moins deux antennes (A) d'émission et de réception.
